# EUROPÄISCHE PATENTSCHRIFT

(11) **EP 0 784 557 B1**
(45) Veröffentlichungstag und Bekanntmachung des Hinweises auf die Patenterteilung: **22.03.2000**
(21) Anmeldenummer: 96922008.6
(22) Anmeldetag: 18.06.1996
(51) Int. Cl.: B62D 5/083

(54) **ZENTRIEREINRICHTUNG**
CENTRING DEVICE
DISPOSITIF DE CENTRAGE

(30) Priorität: 19.06.1995 DE 19521567
(43) Veröffentlichungstag der Anmeldung: 23.07.1997
(73) Patentinhaber: TRW Fahrwerksysteme GmbH & Co. KG, 40547 Düsseldorf (DE)
(72) Erfinder: EBERHART, Eugen, D-40223 Düsseldorf (DE)
(74) Vertreter: Stenger, Watzke & Ring Patentanwälte
(86) Internationale Anmeldenummer: EP9602613
(87) Internationale Veröffentlichungsnummer: WO9700188

(56) Entgegenhaltungen:
- GB-A- 2 215 684
- PATENT ABSTRACTS OF JAPAN vol. 008, no. 195 (M-323), 7.September 1984 & JP 59 084670 A (NISSAN JIDOSHA KK), 16.Mai 1984,

## Beschreibung

Die Erfindung betrifft eine Zentriereinrichtung für ein Lenkventil zur Versorgung eines Stellgliedes mit Hydraulikdruck, bestehend aus einer Eingangswelle, einer Ausgangswelle, einer die Eingangswelle umgebenden und mit der Ausgangswelle zu einer Baugruppe verbundenen Ventilhülse und einem Torsionselement, wobei in einem um die Drehmomentenachse der Eingangswelle und der Ausgangswellen-Nentilhülsenbaugruppe liegenden Umfangsbereich ein elastisches Element in Gestalt einer C-Feder vorgesehen ist, die um die Eingangswelle 3 herumliegend angeordnet ist und auf welche von der Eingangswelle einerseits und der Ausgangswellen-Nentilhülsenbaugruppe andererseits ein Drehmoment anteilig und jeweils gegensinnig übertragen wird.

Lenkventile der gattungsgemäßen Art werden insbesondere in Servolenk-Systemen eingesetzt. Eine mit einer Lenkstange verbundene Eingangswelle wirkt hydraulisch mit einer sie umgebenden Ventilhülse zusammen, die ihrerseits mit einer mit einem Ritzel versehenen Ausgangswelle verbunden ist. Das Ritzel wirkt auf die Zahnstange einer Lenkung. Von einer Pumpe wird Hydraulikflüssigkeit unter geringem Druck durch das System gepumpt. Bei einer relativen Verdrehung der Eingangswelle zur Ventilhülse wird Hydraulikdruck einem Hydraulikmotor zugeführt, welcher die Zahnstangenbewegung in eine der beiden möglichen Richtungen unterstützt. Die Eingangswelle und die Ausgangswelle sind zur Erzeugung einer Drehsteifigkeit mit einem elastischen Torsionselement, vorzugsweise einem Torsionsstab, miteinander verbunden. Eine durch Druck beaufschlagbare Reaktionsvorrichtung kann an dem System angeordnet sein, um ein zusätzliches Zentriermoment bzw. ein Schwellmoment zu erzeugen.

Die gattungsgemäßen Lenkventile werden aktiviert, indem man die Eingangswelle gegenüber dem Ritzel verdreht. Das Torsionsmoment wird dabei durch ein fest eingestelltes Torsionselement, in der Regel der Torsionsdrehstab, bestimmt. Torsionsstäbe haben jedoch den Nachteil, daß eine genau bestimmte Mittenzentrierung mit einer bis in die mittige Neutralstellung wirkenden Zentrierkraft nicht darstellbar ist. Dadurch entsteht der Nachteil, daß es zum Beispiel bei Autobahnfahrten, also bei hohen Geschwindigkeiten, systembedingt immer zuerst über den Verdrehwinkel des Torsionsstabes gelenkt werden muß, selbst wenn bedingt durch die geringen Betätigungskräfte der Lenkung im Grunde keine Hydraulikunterstützung erforderlich wäre, sondern eine manuelle Lenkbetätigung ausreichen würde. Dies führt dazu, daß der Fahrer im ungünstigsten Falle das Lenkrad bis zu zwei Fingerbreiten verdrehen kann, ohne daß dadurch eine Lenkbewegung ausgelöst wird. Dies wird im allgemeinen als sehr unangenehm empfunden, da sich durch dieses "Quasi-Spiel" um die Mittenlage kein direktes und präzises Lenkverhalten, wie von der manuellen Lenkung her bekannt, darstellen läßt.

Die oben beschriebene Reaktionskolbenzentrierung kann zwar ein Zentriermoment erzeugen, ist jedoch, wie beschrieben, schwer einstellbar und überaus aufwendig.

Es ist auch bekannt, anstelle von Spiralfedern beispielsweise einen Metallfaltenbalg einzusetzen, der torsionssteif ist, aber axialelastisch, so daß durch dessen Montage und Voreinstellung ein definiertes Moment erzeugbar ist.

Insgesamt weisen alle beschriebenen Systeme den Nachteil auf, daß an unterschiedlichen Stellen unterschiedliche Elemente montiert und relativ zueinander zentriert bzw. hydraulisch balanciert werden müssen.

Alternativ sind auch Zentriereinrichtungen bekannt, bei welchen der Torsionsstab selbst ergänzt bzw. durch eine Torsionsstabbaugruppe ersetzt wird.

Eine Zentriereinrichtung diverser Art ist beispielsweise in der EP 0244449 B1 beschrieben. Um die Montage der einzelnen Bestandteile an unterschiedlichen Stellen vermeiden zu können, und um insbesondere den Raumbedarf in axialer Richtung sowie eine exakte Mitteneinstellung gewährleisten zu können, wird mit dieser Druckschrift eine Zentriereinrichtung vorgeschlagen, die aus zwei Verbindungsteilen besteht, die im Inneren mit einem Torsionsstab verbunden sind, und im äußeren Umfangsbereich eine mit einem Metallfaltenbalg zusammenwirkende Kugelkupplung aufweisen. Mit dieser Vorrichtung, die als Baueinheit in einem Servolenkventil einsetzbar ist, können einstellbare Zentriermomente erzeugt werden.

Ein Nachteil der vorbekannten Vorrichtung besteht in der Vielzahl der benötigten Bauteile, die nicht nur unabhängig voneinander montiert sondern auch relativ zueinander eingestellt werden müssen. Weitere Nachteile ergeben sich aus dem relativ großen Außendurchmesser des Metallfaltenbalgs sowie aus einem hohen Preisniveau. Die Wirkungsweise der vorbekannten Vorrichtung besteht darin, daß eine Rotationsbewegung in eine axiale Bewegung umgesetzt wird.

Aus der EP 0621168 A1 ist eine alternative Vorrichtung bekannt, bei welcher der Torsionsstab durch eine Röhre mit einer anderen Federcharakteristik umgeben wird. Mittels einem Federsystem werden die Rotationskräfte in Tangentialkräfte umgesetzt und somit bewirkt, daß die den Torsionsstab umgebende Hülse exzentrisch ausgelenkt wird. Dieses sich aus der Rückstellkraft ergebende zusätzliche Moment dient der Zentrierung und verbessert das Ansprechverhalten. Auch diese vorbekannte Vorrichtung ist wegen der Vielzahl der benötigten Bauteile aufwendig, da diese unabhängig voneinander montiert und auch relativ zueinander eingestellt werden müssen. Auch läßt die Bauform keine Miniaturisierung zu.

Ferner ist aus der gattungsgemäßen JP-A-59 084 670 eine weitere alternative Vorrichtung bekannt, die gebildet ist aus einer Eingangswelle und einer Ausgangswelle sowie einer Ventilhülse, wobei die Ventilhülse die Eingangswelle umgibt und mit der Ausgangswelle zu einer Baugruppe verbunden ist. Innerhalb der hohl ausgeführten Eingangswelle ist ein Torsionsstab angeordnet, über den die Eingangswelle und die Ausgangswelle zur Erzeugung einer Drehsteifigkeit miteinander verbunden sind. Des weiteren ist zwischen Eingangswelle und Ausgangswelle eine C-förmige Feder angeordnet, die die Eingangswelle umgibt und im Stirnflächenbereich an der Ausgangswelle anliegt.

Die unterschiedlich zu montierenden Elemente müssen relativ zueinander zentriert bzw. hydraulisch balanciert werden und das durch die C-Feder erzeugte Zentriermoment ist nur sehr schwer einstellbar, was aufwendig ist.

Schließlich ist noch aus der GB 2 215 684 A ein Lenksystem für ein Kraftfahrzeug mit einem eine Eingangswelle, eine Ausgangswelle sowie eine Ventilhülse umschließenden Gehäuse bekannt. Die Eingangswelle und die Ausgangswelle sind dabei über einen in der hohl ausgeführten Eingangswelle angeordneten Torsionsstab miteinander verbunden. Zwischen der Ventilhülse und der Eingangswelle ist ferner ein elastisches Element in Form einer C-Feder vorgesehen, die die Eingangswelle umschließt und im Stirnflächenbereich der Ventilhülse angeordnet ist.

Ausgehend von diesem Stand der Technik liegt der vorliegenden Erfindung die **Aufgabe** zugrunde, eine einfach aufgebaute und mit geringem wirtschaftlichen Aufwand herstellbare Zentriereinrichtung bereitzustellen, die eine vereinfachte Einstellbarkeit aufweist und im wesentlichen effektiv und störunanfällig wirksam ist.

Zur technischen **Lösung** dieser Aufgabe dienen die im Anspruch 1 aufgeführten Merkmale.

Um die oben beschriebenen Nachteile der zum Stand der Technik gehörenden Zentriereinrichtungen zu reduzieren, wurde die erfindungsgemäße, einfache Vorrichtung entwickelt, die Direktheit und Präzision eines manuellen Lenkgetriebes mit den Vorteilen eines geringen Betätigungsmomentes und dem Komfort einer Servolenkung verbindet. Dies wird dadurch erreicht, daß erst ab einem frei wählbaren Zentriermoment des elastischen Elementes eine Aktivierung des Lenkventils zugelassen wird. Unterhalb dieses Zentriermomentes verhält sich das Lenkgetriebe ähnlich wie ein manuelles Lenkgetriebe, das heißt jeder Lenkradbewegung folgt unmittelbar und direkt eine Lenkwirkung.

Dabei ist vorgesehen, daß das elastische Element eine C-Feder ist. Die C-Feder wird gemäß der Erfindung um die Eingangswelle herumliegend angeordnet. Dies erfolgt in besonders vorteilhafter Weise in einem Stirnflächenbereich der Ausgangswelle.

Bei gattungsgemäßen Lenkventilen stehen die Eingangswelle und die Ausgangswelle in einem geringen Überdeckungsverhältnis, wobei am eingangswellenseitigen Ende der Ausgangswelle an dieser die Ventilhülse angeordnet ist und die Eingangswelle umgreift. Die erfindungsgemäße Zentriereinrichtung in Form der genannten C-Federt läßt sich also in dem Bauraum einfach anordnen, welcher im Stirnkantenbereich der Ausgangswelle in dem Zwischenraum zwischen Ventilhülse und Eingangswelle liegt. Soweit erforderlich kann die C-Feder gemäß einem vorteilhaften Vorschlag der Erfindung in entsprechende Nuten in einem oder mehreren der genannten Bauelemente Eingangswelle, Ausgangswelle oder Ventilhülse eingesetzt sein.

Die C-feder wird mittels an den Wellen angeordneten Mitnahmestiften betätigt. Die C-Feder hat konstruktionsbedingt einen offenen Schlitz, in welchen beispielsweise übereinanderliegend Mitnahmestifte hereinragen können. Der eine Mitnahmestift wird an der Eingangswelle befestigt, der andere an der Ausgangswelle oder der Ventilhülse. Bei einer Relativverdrehung der Eingangswelle gegenüber der Ausgangswelle wird also der eine Mitnahmestift auf eine zum Schlitz weisende Stirnfläche der C-Feder einen Druck ausüben und so die C-Feder um den Umfang herum auf den anderen Mitnahmestift mit ihrer anderen Stirnfläche drücken. In Abhängigkeit von der im Umfangsbereich liegenden Federkonstanten der C-Feder ergibt sich also das erforderliche Zentriermoment. In vorteilhafter Weise ist der in die Eingangswelle eingesetzte Mitnahmestift ein Radialstift, während der in die Ausgangswelle eingesetzte Stift ein Axialstift ist.

Die Mitnahmestifte können eingeschraubte Gewindestifte sein, die in entsprechende Gewindebohrungen der jeweiligen Welle oder der Ventilhülsen eingeschraubt sind. Alternativ zu dem in die Stirnkante der Ausgangswelle eingeschraubten Axialstift kann auch ein von Innen in die Ventilhülse eingeschraubter Radialstift verwendet werden. Wesentlich ist, daß die beiden Mitnahmestifte in den C-Federschlitz ragen und somit das gegensinnige Drehmoment von den jeweils beiden Elementen auf das elastische Element übertragen werden kann.

Das Zentriermoment ist einstellbar. Zu diesem Zwecke ist vorgesehen, daß wenigstens die Mitnahmestifte im Kopfbereich, mit welchem sie in den Schlitz der C-Feder ragen, als Exzenter ausgebildet sind. Durch entsprechende Verdrehung kann somit das jeweilige Spiel und ggf. durch Vorspannung der C-Feder auch das Zentriermoment eingestellt werden.

Durch die Verwendung der erfindungsgemäßen C-Feder zwischen Eingangswelle und Ausgangswelle wird die Balancierung des Lenkventils zu einem besonders zu beachtenden Problempunkt. Die mechanische Zentrierung von Eingangswelle zur Ausgangswelle und Torsionsstab kann noch im ölfreien Zustand stattfinden. Die Eingangswelle und der Torsionsstab können fest miteinander verbunden werden, beispielsweise durch Schweißen oder dergleichen. Die Einheit Torsionsstab/Eingangswelle wird dann mit der Ausgangswelle unter Zwischenschaltung der Zentriereinrichtung, beispielsweise in Form der C-Feder, verbunden. Die die Eingangswelle umgebende und mit der Ausgangswelle im Eingriff stehende Ventilhülse ist dann hydraulisch zu balancieren und erst im Anschluß daran verdrehfest mit der Ausgangswelle zu verbinden. Dies kann beispielsweise dadurch erfolgen, daß die Ventilhülse nach dem Einstellen der hydraulischen Mitte mit der Ausgangswelle im Übergriffsbereich verpreßt wird. Alternativ besteht die Möglichkeit, eine Exzenterschraube einzusetzen, mit welcher die Hülse in ihrer Verdrehposition relativ zur Ausgangswelle im Überdeckungsbereich verdrehbar ist.

Durch die Anordnung des zusätzlichen elastischen Elements zwischen der Eingangswelle einerseits und der Baugruppe-Ausgangswelle/Ventilhülse andererseits wird praktisch ein zweites elastisches Element zum Torsionsstab parallel geschaltet und die jeweiligen Federcharakteristika ergänzen sich. Die erfindungsgemäße Vorrichtung ist äußerst einfach realisierbar, nachrüstbar, sehr kostengünstig herstellbar und effektiv einsetzbar.

Weitere Vorteile und Merkmale der Erfindung ergeben sich aus der folgenden Beschreibung anhand der Figuren. Dabei zeigen:
- Figur 1: eine schematische teilgeschnittene Ansicht eines Lenkventils;
- Figur 2: eine Detaildarstellung der Verbindung der C-Feder mit der Eingangswelle;
- Figur 3: eine Detaildarstellung des Stirnkantenbereichs der Ausgangswelle und
- Figur 4: eine Detaildarstellung des Überdeckungsbereiches zwischen Ausgangswelle und Ventilhülse.

Die Figuren zeigen ein Lenkventil 1, wobei in einem Gehäuse 2 eine aus diesem herausragende Eingangswelle 3 mit einer Ausgangswelle 4 über eine dazwischen angeordneten Torsionsstab 5 verbunden ist.

Die Eingangswelle 3 und die Ausgangswelle 4 sind gegenüber dem Gehäuse mittels Dichtungs-/Lagerbaugruppen 7, 8 abgedichtet und drehbar gelagert.

Die Ausgangswelle 4 weist ein Ritzel 9 auf, welches mit dem Lenkgetriebe 10 in an sich bekannter Weise zusammenwirkt.

Die Eingangswelle umgreifend ist eine C-Feder 11 angeordnet. Zu diesem Zwecke ist in der Ventilhülse 6 eine Ringnut ausgebildet, in welcher die C-Feder eingesetzt ist. Die Mitnahmestifte 12, 13 machen die Federkonstante der C-Feder nutzbar. Der Mitnahmestift 12 ist radial in die Eingangswelle 3 eingesetzt. Der Mitnahmestift 13 ist axial in die Stirnfläche der Ausgangswelle 4 eingesetzt. Beide Mitnahmestifte ragen in den Schlitz der C-Feder, so daß einer Relativverdrehung der Eingangswelle 3 gegenüber der Ausgangswelle 4 die Momente gegensinnig auf die C-Feder übertragen werden.

Wird auf die Eingangswelle 3 ein Lenkmoment gegeben, wird dieses über den Torsionsstab 5 in das Ritzel 9 geleitet. Bei alleiniger Übertragung des Lenkmomentes durch den Torsionsstab 5 kann jedoch nur ein Drehmoment übertragen bzw. aufgebaut werden, wenn eine Relativverdrehung der Eingangswelle 3 gegenüber der Ausgangswelle 4 zugelassen wird, mit den daraus erfolgenden negativen Eigenschaften. Aus diesem Grunde wird ein weiteres elastisches Element, die C-Feder 11, zwischen Eingangswelle und die Baugruppe bestehend aus Ausgangswelle 4 und Ventilhülse 6 angeordnet. Durch die Parallelschaltung des Torsionsstabes mit einer zusätzlichen Zentriereinrichtung können die entsprechenden erfindungsgemäßen Vorteile erzielt werden. Die C-Feder 11 wirkt vorwiegend bei kleinen Verdrehwinkel, während der Torsionsstab 5 die größeren Zentrierkräfte bei größeren Verdrehwinkeln bewerkstelligt. Beim Lenken wird das Lenkmoment von der Eingangswelle 3 über den Mitnahmestift 12 auf die C-Feder 11 geleitet, die durch den Mitnahmestift 13 ihrerseits mit der Ausgangswelle 4 verbunden ist.

Durch die während der Montage vorgespannte C-Feder 11 kann nur eine Verdrehung und damit Aktivierung des Ventils 1 erfolgen, wenn die C-Feder 11 durch die beiden Stifte 12, 13 der sich verdrehenden Wellen 3, 4 weiter aufgespreizt wird. Dieser Effekt wird positive Zentrierung genannt, da die Vorspannung der C-Feder 11 einen Schwellenwert für ein Aktivierungsmoment beschreibt, unterhalb dessen keine Verdrehung und somit Aktivierung des Lenkventils möglich ist. Dieses Zentriermoment kann durch einfache geometrische Auslegung der C-Feder 11 eingestellt werden. Auch können die Köpfe der Mitnahmestifte 12, 13 exzentrisch ausgebildet sein, um somit die Vorspannung einstellen zu können. Da durch die Montage der C-Feder 11 die Eingangswelle 3 gegenüber der Ausgangswelle 4 ausgerichtet wird, kann die hydraulische Balancierung des Ventils nicht mehr durch die Relativverdrehung der Eingangswelle 3 gegenüber der Ausgangswelle 4 mittels der mit der Ausgangswelle 4 verbundenen Ventilhülse 6 erfolgen. Aus diesem Grunde ist eine neue Methode des hydraulischen Balancierens vorgeschlagen, wobei die Ventilhülse 5 gegen die Eingangswelle, die bereits mittels der C-Feder 11 mit der Ausgangswelle zentriert ist, verdreht, bis die hydraulische Mitte gefunden ist. Dann wird durch Verpressen der Ventilhülse 6 gegen eine Rändelverzahnung auf der Ausgangswelle 4 im Überdeckungsbereich 14 der eingestellte Zustand fixiert.

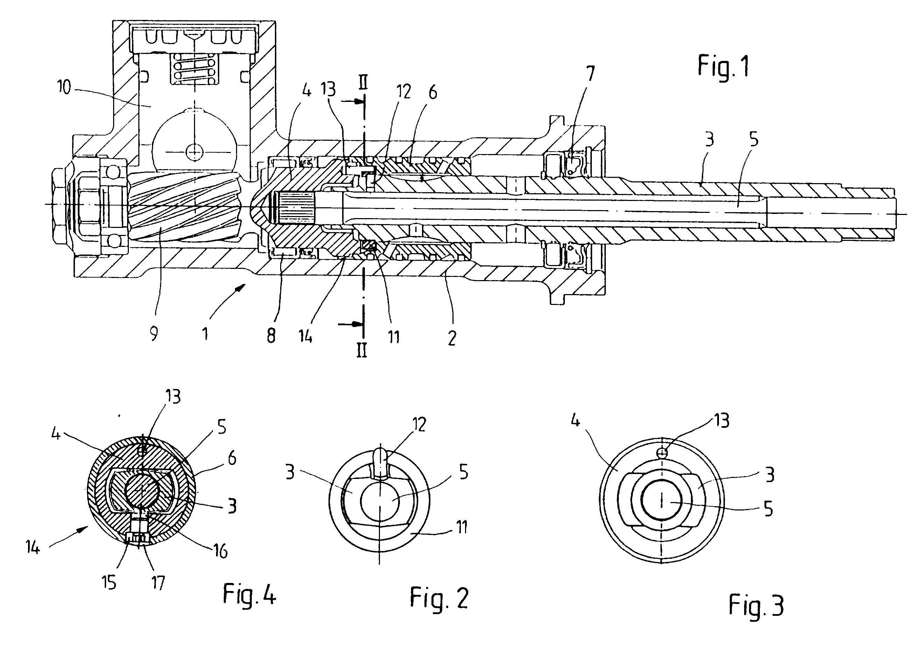

Eine weitere Möglichkeit besteht darin, die Steuerhülse mittels eines Exzenters zwischen Steuerhülse und Ritzel zu verdrehen, bis die hydraulische Balancierung gefunden ist. Dadurch hat man die Möglichkeit einer exakten Feinjustierung. Dazu zeigt Figur 4 eine Schnittansicht, in welcher die Details des Überdeckungsbereichs 14 einer nicht weiter gezeigten alternativen Ausführungsform; die bis auf dieses Detail der in den Figuren 1 bis 3 entspricht, gezeigt sind. In dieser Schnittansicht sieht man geschnitten die Ausgangswelle 4, in welche die Eingangswelle 3 eingreift. Um eine Verdrehbarkeit der beiden Wellen im erforderlichen Winkelbereich gewährleisten zu können, sind die Seitenflächen der Eingangswelle im Einsetzbereich angewinkelt. Die Eingangswelle wird durchragt vom Torsionsstab 5. Die Ausgangswelle 4, welche die Bohrung für den Mitnahmestift 13 aufweist, ist von der Ventilhülse 6 im Überdeckungsbereich 14 umgeben. An dieser Stelle wird die Ventilhülse relativ zur Ausgangswelle fixiert. Die Fixierposition, die der hydraulischen Mitte des Ventils entsprechen soll, kann im gezeigten Ausführungsbeispiel durch eine Exzenterschraube 15 eingestellt werden. Diese ist in einer Bohrung 16 in der Ausgangswelle eingesetzt und mit dem exzentrischen Kopf in einer Bohrung 17 der Ventilhülse. Durch eine Verdrehung der Exzenterschraube 15 werden Ventilhülse und Ausgangswelle relativ zueinander verdreht. Die Fixierung erfolgt durch Kleben, mechanisch oder sonstwie.

Da die mechanische Zentrierung von Eingangswelle zu Ausgangswelle und Torsionsstab noch im ölfreien Zustand stattfinden kann, besteht die Möglichkeit, die Eingangswelle 3 mit dem Torsionsstab 5 mittels Schweißen zu verbinden. Dabei werden durch Laserschweißen die kleinsten Probleme durch Verzug beim Abkühlen erwartet. Außerdem kann durch diese Art der Fixierung im Gegensatz zur bisherigen Verstiftung auf einen O-Ring zwischen Eingangswelle und Torsionsstab verzichtet werden. Daraus ergeben sich weitere Kosteneinsparungen und eine verbesserte Dichtheit. Die beschriebenen Vorteile sind erfindungswesentlich.

### Bezugszeichenliste:

- 1: Lenkventil
- 2: Gehäuse
- 3: Eingangswelle
- 4: Ausgangswelle
- 5: Torsionsstab
- 6: Ventilhülse
- 7: Dichtungs-/Lagerbaugruppe
- 8: Dichtungs-/Lagerbaugruppe
- 9: Ritzel
- 10: Lenkgetriebe
- 11: C-Feder
- 12: Mitnahmestift
- 13: Mitnahmestift
- 14: Überdeckungsbereich
- 15: Exzenterschraube
- 16: Bohrung
- 17: Bohrung

## Patentansprüche

1. Zentriereinrichtung für ein Lenkventil (1) zur Versorgung eines Stellgliedes mit Hydraulikdruck, bestehend aus einer Eingangswelle (3), einer Ausgangswelle (4), einer die Eingangswelle (3) umgebenden und mit der Ausgangswelle (4) zu einer Baugruppe verbundenen Ventilhülse (6) und einem Torsionselement (5), wobei in einem um die Drehmomentenachse der Eingangswelle (3) und der Ausgangswellen-Nentilhülsenbaugruppe (4, 6) liegenden Umfangsbereich ein elastisches Element in Gestalt einer C-Feder (11) vorgesehen ist, die um die Eingangswelle (3) herumliegend angeordnet ist und auf welche von der Eingangswelle (3) einerseits und der Ausgangswellen-/Ventilhülsenbaugruppe (4, 6) andererseits ein Drehmoment anteilig und jeweils gegensinnig übertragen wird,
**dadurch gekennzeichnet**,
daß das durch die C-Feder (11) erzeugte Zentriermoment einstellbar ist, wozu die für die Drehmomentenübertragung auf die C-Feder (11) in die Wellen bzw. Baugruppen eingesetzten Mitnahmestifte (12, 13) einen exzentrischen Kopf aufweisen.

2. Zentriereinrichtung nach Anspruch 1, dadurch gekennzeichnet, daß die C-Feder (11) im Stirnflächenbereich der Ausgangswelle (4) angeordnet ist.

3. Zentriereinrichtung nach einem der vorhergehenden Ansprüche, dadurch gekennzeichnet, daß in die Eingangswelle (3) ein Mitnahmestift (12) in Radialrichtung eingesetzt ist.

4. Zentriereinrichtung nach einem der vorhergehenden Ansprüche, dadurch gekennzeichnet, daß in die Ausgangswelle (4) ein axial verlaufender Mitnahmestift (13) eingesetzt ist.

5. Zentriereinrichtung nach einem der vorhergehenden Ansprüche, dadurch gekennzeichnet, daß die C-Feder (11) aus Kunststoff besteht.

## Claims

1. Centring device for a steering valve (1) for supplying an actuator with hydraulic pressure, comprising an input shaft (3), an output shaft (4), a valve sleeve (6), which surrounds the input shaft (3) and is connected to the output shaft (4) to form a subassembly, and a torsion element (5), wherein provided in a peripheral region lying around the torque axis of the input shaft (3) and the output shaft/valve sleeve subassembly (4, 6) is a flexible element in the form of a C-spring (11), which is disposed so as to lie around the input shaft (3) and to which a torque is transmitted proportionally and in each case in an opposite direction by the input shaft (3), on the one hand, and the output shaft/valve sleeve subassembly (4, 6), on the other hand,
characterized in
that the centring moment generated by the C-spring (11) is adjustable, for which purpose the slaving pins (12, 13), which are inserted into the shafts and/or subassemblies for transmitting torque to the C-spring (11), have an eccentric head.

2. Centring device according to claim 1, characterized in that the C-spring (11) is disposed in the end face region of the output shaft (4).

3. Centring device according to one of the preceding claims, characterized in that a slaving pin (12) is inserted radially into the input shaft (3).

4. Centring device according to one of the preceding claims, characterized in that an axially extending slaving pin (13) is inserted into the output shaft (4).

5. Centring device according to one of the preceding claims, characterized in that the C-spring (11) is made of plastic material.

## Revendications

1. Dispositif de centrage d'une soupape de direction (1) servant à alimenter en pression hydraulique un organe de réglage constitué d'un arbre d'entrée (3), d'un arbre de sortie (4), d'un manchon de soupape (6) entourant l'arbre d'entrée (3) et assemblé à l'arbre de sortie (4) en un sous-groupe, et d'un élément de torsion (5), un élément élastique sous la forme d'un ressort en C (11) étant prévu dans une zone périphérique située autour de l'axe de moment de rotation de l'arbre d'entrée (3) et du sous-groupe arbre de sortie - manchon de soupape (4, 6), ressort qui est disposé autour de l'arbre d'entrée (3) et auquel un moment de rotation est transmis, proportionnellement et à chaque fois en sens inverse, par l'arbre d'entrée (3) d'une part et par le sous-groupe arbre de sortie - manchon de soupape (4, 6) d'autre part,
caractérisé en ce que le moment de centrage produit par le ressort en C (11) est réglable, les broches d'entraînement (12, 13) insérées dans les arbres ou dans les sous-groupes et servant à la transmission du moment de rotation au ressort en C (11) comportant à cet effet une tête excentrique.

2. Dispositif de centrage selon la revendication 1, caractérisé en ce que le ressort en C (11) est disposé dans la zone de la face frontale de l'arbre de sortie (4).

3. Dispositif de centrage selon l'une des revendications précédentes, caractérisé en ce qu'une broche d'entraînement (12) est insérée en direction radiale dans l'arbre d'entrée (3).

4. Dispositif de centrage selon l'une des revendications précédentes, caractérisé en ce qu'une broche d'entraînement (13) s'étendant en direction axiale est insérée dans l'arbre de sortie (4).

5. Dispositif de centrage selon l'une des revendications précédentes, caractérisé en ce que le ressort en C (11) est fait de matière synthétique.
